# EUROPEAN PATENT SPECIFICATION

(11) **EP 4 410 676 B1**
(45) Date of publication and mention of the grant of the patent: **05.11.2025**
(21) Application number: 23197892.5
(22) Date of filing: 18.09.2023
(51) Int. Cl.: B64D 11/00, B25J 5/02, B25J 11/00, B25J 17/02

(54) **ROBOT AND IN-CABIN SERVICE SYSTEM**
ROBOTER UND SERVICESYSTEM IN EINER KABINE
ROBOT ET SYSTÈME DE SERVICE DANS UNE CABINE

(30) Priority: 01.02.2023 KR 20230013589
(43) Date of publication of application: 07.08.2024
(73) Proprietor: HYUNDAI MOTOR COMPANY, Seoul 06797 (KR); Kia Corporation, Seocho-gu Seoul 06797 (KR)
(72) Inventor: Chung, Jae Hoon, Seoul (KR)
(74) Representative: Hoffmann Eitle

(56) References cited:
- WO-A2-00/46100
- DE-A1- 102017 201 187
- US-A1- 2013 199 402
- ABE KAZUKI ET AL: "ABENICS: Active Ball Joint Mechanism With Three-DoF Based on Spherical Gear Meshings", IEEE TRANSACTIONS ON ROBOTICS, IEEE SERVICE CENTER, PISCATAWAY, NJ, US, vol. 37, no. 5, 26 April 2021 (2021-04-26), pages 1806 - 1825, XP011880700, ISSN: 1552-3098, [retrieved on 20210930], DOI: 10.1109/TRO.2021.3070124

## Description

### TECHNICAL FIELD

The present disclosure relates to a robot configured to safely and automatically deliver or collect an article, such as an in-flight meal, bedding, or the like, in a cabin of a mobility vehicle, and an in-cabin service system including the same.

### BACKGROUND

In the aircraft, a crew member delivers articles such as food, drinks, blankets, cushions, or the like to passengers, and collects garbage, recyclables, or the like from the passengers. The crew member may use a manually controlled cart.

Providing in-flight services in this manner is cumbersome and slow, and disrupts passenger's comfort and movement in the aisles. In addition, from the aircraft operator's viewpoint, this approach is costly and difficult to maintain at a given quality of service because it depends on the number of passengers and a degree of skill of the crew member.
WO 00/46100 A2 relates to a method and transport system for transporting and dispensing items to passengers in an aircraft. DE 10 2017 201187 A1 relates to a service system for mass transportation means for catering to passengers and to a mass transportation means with such a service system.

### SUMMARY

The present invention is defined by the robot according to independent claim 1 and the in-cabin service system according to claim 13. Other preferred optional features are recited in the dependent claims. The following summary presents a simplified summary of certain features.

Systems, apparatuses, and methods are described for a robot. A robot comprises a rail installed on a ceiling or a side wall of a cabin, a slider configured to move along the rail, a robot arm having one end pivotably connected to the slider, and a tray connected to another end of the robot arm and configured to maintain an orientation so as to be able to support an article.

An in-cabin service system may comprise a terminal disposed in a cabin, a management server communicatively connected to the terminal, and a robot communicatively connected to the management server and configured to operate according to a signal from the management server. The robot may comprise a rail installed on a ceiling or a side wall of a cabin, a slider configured to move along the rail, a robot arm having one end pivotably connected to the slider, and a tray connected to another end of the robot arm and configured to maintain an orientation so as to be able to support an article.

These and other features and advantages are described in greater detail below.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a view schematically illustrating an example in which a robot according to an example of the present disclosure is applied in a cabin.
FIG. 2 is a perspective view illustrating a robot according to an example of the present disclosure.
FIG. 3 is a perspective view illustrating a rail, a slider, and an active ball joint.
FIG. 4 is a cross-sectional view illustrating a rail and a slider.
FIG. 5 is a partially exploded perspective view illustrating a main portion of an active ball joint.
FIG. 6 is a view illustrating a modified example of a tray.
FIG. 7 is a schematic configuration diagram of an in-cabin service system including a robot according to an example of the present disclosure.

### DETAILED DESCRIPTION

Hereinafter, the present disclosure is illustrated in detail with reference to the drawings. In adding reference numerals to components of each of the drawings, it should be noted that the same components have the same numerals as much as possible even if they are displayed on different drawings.

For convenience of description, the present disclosure will be described with reference to an example application to an aerial mobility vehicle having a cabin, but the present disclosure is not limited thereto. For example, concepts disclosed herein can also be applied to other types of mobility vehicles, such as to a waterborne mobility vehicle, an underwater mobility vehicle, a land mobility vehicle, or the like, equipped with a cabin and/or an indoor space.

In addition, terms such as first, second, and the like may be used to describe various components, but these terms are used only for the purpose of distinguishing one component from another component and do not imply an order, sizes, magnitudes, positions, and/or importance of these components.

Electrification and/or automation, if achieved effectively and economically, may enable safe and effective automation of delivery and collection of articles, e.g., provided as in-flight service.

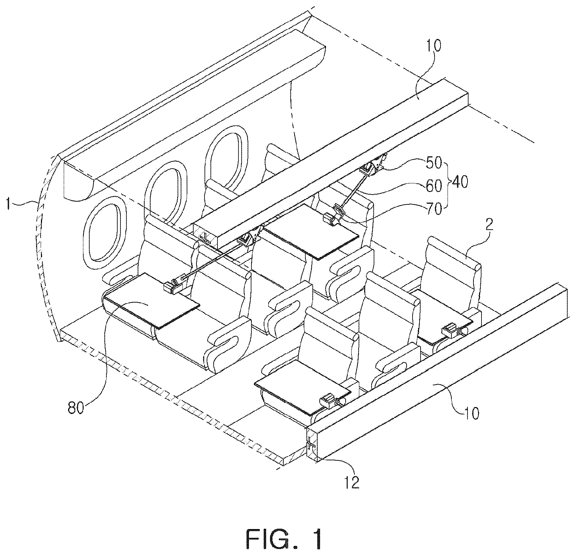

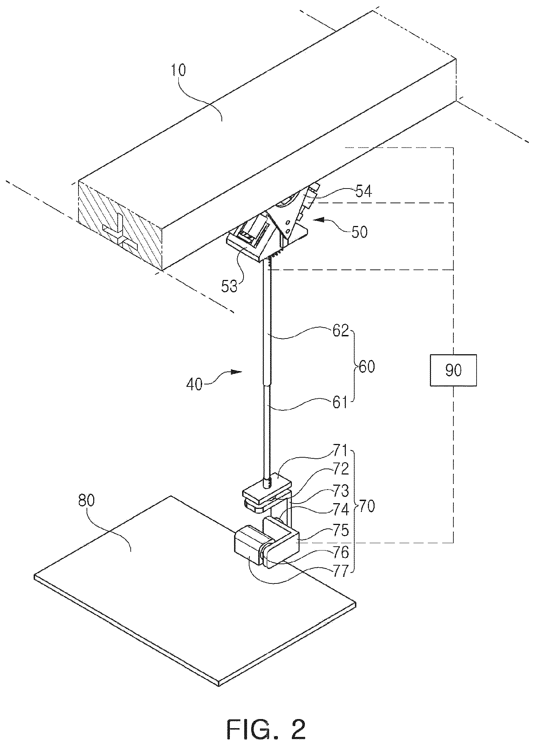

FIG. 1 is a view schematically illustrating an example in which a robot according to an example of the present disclosure is applied in a cabin 1, and FIG. 2 is a perspective view illustrating a robot according to an example of the present disclosure.

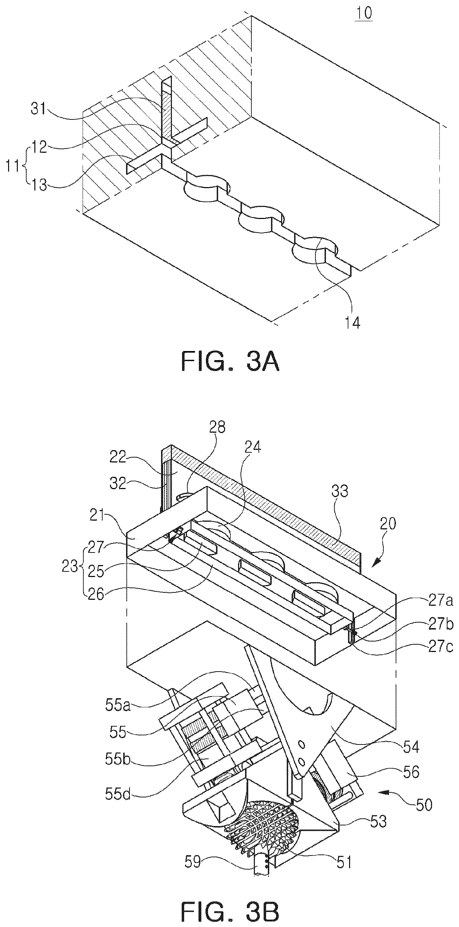

A robot according to an example of the present disclosure includes a rail 10, a slider 20 (not visible in FIG. 1, see FIG. 3B, e.g.), a robot arm 40, and a tray 80.

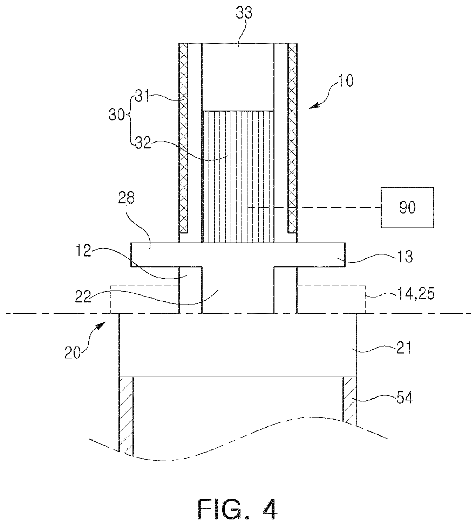

FIG. 3 is a perspective view illustrating a rail 10, a slider 20, and an active ball joint 50, and FIG. 4 is a cross-sectional view illustrating a rail 10 and a slider 20.

A rail 10 may be disposed on a ceiling and/or a side wall of a cabin 1 in a longitudinal direction of the cabin 1. The rail may be at least partially formed of a conductive material, e.g., metal. The rail 10 may include a groove portion 11 (e.g., a groove 11 formed in the rail 10) formed to extend in a longitudinal direction of the rail, and through at least one end portion thereof.

The groove portion 11 may have a substantially cross-shaped cross-section. The groove portion 11 may include a main groove 12, and a separation prevention groove 13 formed in a direction intersecting the main groove 12, wherein the main groove 12 and separation prevention groove 13 each extend in the longitudinal direction of the rail 10. The main groove 12 may be exposed externally to the rail 10 through an opening in the rail 10 of the groove portion 11.

In addition, a plurality of locking grooves 14 may be disposed at intervals from each other in the longitudinal direction of the rail 10 and may be formed on at least one edge of the groove portion 11.

An example in which the rail 10 is disposed on the ceiling of the cabin 1 is representatively illustrated and described, but is not limited thereto, and for example, the rail 10 may be installed on the side wall of the cabin 1.

In a robot according to an example of the present disclosure, the rail 10 serves (e.g., be configured) to guide movement of the robot arm 40and/or the tray 80, and also constitutes a portion of a first driver 30 configured to provide a moving force to the robot. Further, since the rail 10 may be configured to be electrically connected to (e.g., to conduct electricity from) a power source, current may be applied to a coil of the first driver 30 through the slider 20.

The slider 20 may be inserted into the rail 10, for example, the main groove 12 of the groove portion 11, and may slide back and forth in the longitudinal direction of the rail 10 in the groove portion 11 of the rail 11.

To this end, the slider 20 may have a cross-sectional shape corresponding to that of the groove portion 11 of the rail 10. For example, the slider 20 may be formed to have a substantially T-shape cross-section. Therefore, the slider 20 may include a support portion 21 having a flat shape (e.g., having a substantially flat surface) and configured to support the robot arm 40 (e.g., connected to the robot arm 40), and an insertion portion 22 connected to the support portion 21 at an angle (e.g., a right angle or otherwise so as to extend from the substantially flat surface of the support portion 21). The insertion portion 22 may be configured to be inserted into the main groove 12 of the groove portion 11.

At least the support portion 21 may have a hollow portion, and may include a position fixing portion 23 configured to extend out of or retract into (e.g., entirely into) the hollow portion. To this end, at least one through-hole 24 may be formed in one side of the support portion 21 (e.g., a substantially flat surface of the support portion 21).

The position fixing portion 23 may include a stud 25 (and/or a plurality of studs 25), a frame 26 connected to the stud 25, and a second driver 27 in the hollow portion of the support portion 21 so as to be configured to provide a driving force for moving the frame 26.

The stud 25 may be, for example, a pillar member having a substantially semicircular cross-section, and may be inserted into a corresponding locking groove while being shape-fitted to one of the plurality of locking grooves 14 of the rail 10. A shape of the stud 25 is not limited thereto, and may have any other polygonal, elliptical and/or irregular cross-sectional shape.

The frame 26 may connect the stud 25 to the second driver 27, and may serve as a stopper preventing the stud 25 from being completely separated from the support portion 21 through the through-hole 24. Also, when a plurality of studs 25 are provided, the frame 26 may connect the plurality of studs 25 such that the studs 25 move integrally (e.g., while maintaining a spatial distribution of the studs 25).

A rack and a pinion mechanism may be employed as the second driver 27. For example, the second driver may include a motor 27a installed on (e.g., connected to) the frame 26, a pinion gear 27b connected to a motor shaft of the motor 27a, and a rack gear 27c in the hollow portion of the support portion 21 and engaged with the pinion gear 27b.

When the pinion gear 27b connected to the motor shaft of the motor 27a rotates by driving force of the motor 27a, the pinion gear 27b may move along the rack gear 27c while rotating in engagement with the rack gear 27c. Therefore, the frame 26 and the at least one stud 25 may move along with movement of the pinion gear, such that the stud 25 protrudes (e.g., extends) from the support portion 21 through the through-hole 24.

The protruded stud 25 may be shape-fitted into one of the plurality of locking grooves 14 of the rail 10, and may be inserted into a corresponding locking groove 14, such that a position of the slider 20 relative to the rail 10 may be fixedly determined.

The motor 27a may rotate in a forward and/or a backward direction upon application of power. The stud 25 may be moved the driving force due to an operation of the motor 27a, such that the stud 25 may protrude from (e.g., extend from) a surface of the support portion 21 or be immersed in (e.g., retract into) the hollow portion of the support portion 21.

The second driver 27 may be provided in pairs to implement a stable operation of the stud 25. A configuration of the second driver is not limited to the above-described example, and a fluid pressure cylinder such as a pneumatic cylinder, an electric actuator such as a solenoid actuator, and the like equipped with an operating rod may be employed.

The insertion portion 22 may include a separation prevention portion 28 formed to protrude in a direction intersecting the movement direction of the slider 20 and configured to be insertable into the separation prevention groove 13 of the groove portion 11.

When a robot according to an example of the present disclosure is installed on the ceiling or the side wall of the cabin 1, the separation prevention portion 28 and the separation prevention groove 13 may prevent the slider 20 from being separated from (or move relative to) the rail 10 in a height and/or width direction of the cabin 1.

In this manner, the robot may be continuously and stably supported on the ceiling or the side wall of the cabin 1 for any movement of the mobility vehicle.

In a robot according to an example of the present disclosure, the rail 10 and the slider 20 forms a portion of the first driver 30. For example, the first driver 30 of a robot according to an example of the present disclosure employs a linear motor.

To this end, a plurality of permanent magnets 31 may be arranged on an inner wall of the rail 10 in the longitudinal direction of the rail, and a coil 32 may be wound and/or stacked on the insertion portion 22 of the slider 20.

The plurality of permanent magnets 31 may be alternately arranged to have different polarities on each inner wall of the rail 10, but may be aligned with permanent magnets on the opposite inner wall such that the same poles face each other. Each of the permanent magnets may be fixedly mounted to the rail using any suitable technique, such as an adhesive, a fastener, or the like.

The coil 32 may be wound and/or stacked on the insertion portion 22 of the slider 20 so as to form a magnetic gap configured to face surfaces of the permanent magnets 31 (e.g., when the slider 20 is inserted in the groove portion 11 of the rail 10). A current may be applied to the coil 32 so as to generate a magnetic flux around the coil. The current may be applied based on a position of the permanent magnets 31 such that this magnetic flux around the coil interacts with a magnetic flux of the permanent magnet so as to generate an electromagnetic force (e.g., a moving force). Therefore, the slider 20 may be movable (e.g., linearly) along the rail 10.

The coil 32 and the permanent magnets 31 may not be in physical contact with each other. A change in magnetic flux may occur when the coil conducts electricity, and thus a moving force may be generated between the coil 32 and the permanent magnets 31.

For example, a current may be applied to have a positive (+) value, a zero (0) value, or a negative (-) value at regular intervals. A direction of the current in the coil 32 may be applied in such a manner as to generate a positive moving force in all coils considering a direction of magnetic flux generated by the permanent magnet 31. As a result, linear movement may be made in a single direction. When reverse movement is required, current may be provided to all coils to create a negative moving force.

In a robot according to an example of the present disclosure, the permanent magnet 31 may be installed on the rail 10 such that a position thereof is fixed, and the coil 32 may be arranged on the slider 20 such that the coil 32 moves with the slider 20, but the disclosure is not limited to this example. For example, the coil 32 and the permanent magnet 31 may be arranged opposite to each other such that the permanent magnet 31 moves with the slider 20 while the coil 32 remains stationary with the rail 10. The disclosure also encompasses any combination of these arrangements.

A robot according to an example of the present disclosure may further include a connection terminal 33 mounted on the slider 20 so as to be located between the rail 10 and the slider 20, and configured to contact and slider 20 on the rail 10 and to conduct electricity with the rail 10, through which current flows.

The connection terminal 33 may be formed of a conductor having excellent electrical conductivity, and may be fixedly installed at (e.g., connected to) an end portion of the insertion portion 22 of the slider 20 using any suitable technique, such as an adhesive, a fastener, or the like. The connection terminal 33 may be electrically connected to the coil 32.

The rail 10 may be electrically connected to a power source (not illustrated) such that current may flow from the power source through the rail 10. The connection terminal 33 may be in continuous contact with the inner surface of the rail (e.g., with a surface forming the groove portion 11) while sliding along with the slider 20, and the connection terminal 33 may transfer current applied from the rail 10 to the coil 32 through this connection, to supply power to the first driver 30.

The robot arm 40 may include an active ball joint 50 mounted on the slider 20, an arm member 60 having one end connected to an output shaft 59 of the active ball joint, and a gimbal 70 mounted on the other end of the arm member 60.

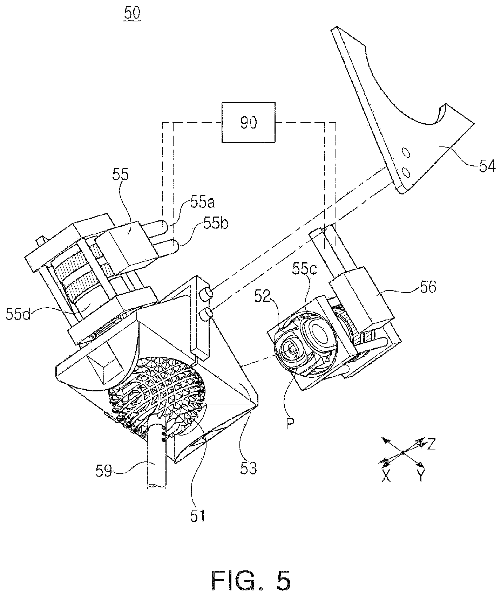

FIG. 5 is a partially exploded perspective view illustrating a main portion of an active ball joint 50.

An active ball joint 50 may connect a robot arm 40 to a slider 20 movable along a rail 10, and may allow the robot arm 40 to pivot with up to three-axis degree of freedom.

For pivoting of the robot arm 40 having a three-axis degree of freedom, the active ball joint 50 may utilize a unique interaction between a cross spherical gear 51 and a monopole gear 52. The cross spherical gear 51 may have orthogonal teeth formed over a surface of a sphere (e.g., over the entire surface or entire exposed surface), and the monopole gear 52 may be engagement with this type of cross spherical gear.

Due to such non-slip gear engagement, the active ball joint 50 may provide high torque transmission and stable positioning, even without a 3D sensor.

Specifically, the active ball joint 50 may include a holder 53 fixed to the slider 20 via a bracket 54 and having a concave groove; a cross spherical gear 51 partially accommodated in the concave groove, supported by the holder, having orthogonal teeth formed over a surface thereof (e.g., an entire surface thereof), and having one side fixed to an output shaft 59; a pair of monopole gears 52 engaged on both sides of the cross spherical gear; and a pair of drivers, for example, a third driver 55 and a fourth driver 56, each mounted on the holder 53, and respectively providing driving force to and supporting a corresponding monopole gear 52.

The cross spherical gear 51 may be formed by molding or processing two axisymmetric tooth structures on a spherical member. First, a first tooth structure may have an involute gear profile projected in an X-Y plane, for example. Then, a second tooth structure may be further molded or processed around a Y-axis, such that teeth orthogonal to both axes may be formed on the spherical surface.

Each of the monopole gears 52 may have a unique tooth structure called a pole P that may be engaged with the cross spherical gear. For example, when a Z-axis is aligned with a rotational axis of the monopole gear 52 and an X-axis is aligned with the pole, then the monopole gear 52 may be symmetrical in the X-Y plane and the cross-section may have an involute gear profile.

Since two poles of the cross spherical gear 51 are symmetrical, the monopole gear 52 having half the number of teeth and one pole may be engaged with the cross spherical gear indefinitely. This behavior may be illustrated as having a polar orbit for the monopole gear.

For example, the monopole gear 52 may drive the cross spherical gear 51, when assembled by a differential mechanism. Since the third driver 55 and the fourth driver 56 have the same configuration, only the configuration of the third driver will be described for convenience.

The third driver 55 may provide a two-axis degree of freedom to the monopole gear 52 using two motors. The third driver may include a roll driving motor 55a and a pitch driving motor 55b, such that the monopole gear 52 may roll and pitch. Power for these driving motors may be obtained through a connection terminal 33 contacting the rail 10, through which current flows.

A differential mechanism may include an internal rotor 55c, a differential internal worm gear 55d, and a differential pinion (not illustrated).

The internal rotor 55c may rotate about a roll axis by the roll driving motor 55a, and may support a rotational axis of a corresponding monopole gear, for example, a pitch axis (a Z-axis). The differential internal worm gear 55d having teeth in a cylinder may rotate about a roll axis by the pitch driving motor 55b. The differential pinion mounted on the internal rotor may transmit a force generated by a difference in rotation speed between the internal rotor and the differential inner worm gear, to the monopole gear 52.

The monopole gear 52 may be provided with a rotational driving force about the roll axis and the pitch axis from the internal rotor 55c and the differential pinion, respectively.

The active ball joint 50 should have a pair of drivers 55 and 56, and the monopole gear 52 should be engaged with one of the two teeth structures of the cross spherical gear 51, respectively. Through this mechanism, an output shaft 59 fixed to the cross spherical gear 51 may realize pivoting with a three-axis degree of freedom.

A more detailed configuration and operation of the active ball joint 50 applicable to a robot according to an example of the present disclosure are described in "ABENICS: Active Ball Joint Mechanism With Three-DoF Based on Spherical Gear Meshings" (Kazuki Abe et al.) in IEEE TRANSACTIONS ON ROBOTICS journal (vol. 37, no. 5, pp. 1806-1825, Oct. 2021.

As the arm member may be mounted on the output shaft 59 of the active ball joint 50, as a result, an arm member 60 may perform pivoting with a three-axis degree of freedom.

The arm member 60 may include a linear actuator equipped with an operating rod 61. For example, an electric linear actuator capable of determining a position of the operating rod with high precision by rotating a ball screw (not illustrated) in a case with a stepping motor mounted on one side of a case 62 may be adopted as the arm member.

The stepping motor may be configured to rotate forward and/or backward with application of power. Rotational driving of the ball screw according to an operation of the stepping motor may be converted into a linear reciprocating motion of the operating rod screwed into the ball screw. Therefore, the operating rod 61 may expand to protrude away from the case 62 or contract toward a side adjacent to the case 62.

A controller 90, which will be described later, may be configured to transmit a control signal related to expansion and contraction of the arm member 60 to the stepping motor of the electric linear actuator, based on input positional information or the like, to drive the operation rod 61 of the arm member. In addition, power of the stepping motor may be obtained through the connection terminal 33 contacting the rail 10 through which current flows.

An electric linear actuator of the arm member 60 may be any suitable electric linear actuators in any of various configurations.

In addition to the electric linear actuator, a linear actuator using a magnetic force, a linear actuator using a piezoelectric effect, or the like, may be employed, as well as a fluid pressure cylinder such as a pneumatic cylinder may be employed.

A gimbal 70 may be mounted on an end of the arm member 60, for example, an end of the operating rod 61. The gimbal may be a multi-axis gimbal 70 having at least three axes. The gimbal 70 may be connected to the end of the arm member, and may allow for maintaining a horizontal posture of a tray 80.

For example, the gimbal 70 may include a plurality of drivers, for example, a fifth driver 72, a sixth driver 74, and a seventh driver 76.

The fifth driver 72 may be coupled to an end of the arm member 60 so as to be rotatable about a yaw axis parallel to an axial direction of the arm member 60. In this case, the fifth driver 72 may connect a first fixing portion 71 fixed to the end of the arm member 60, for example, the end of the operating rod 61, and a second fixing portion 73, such that the second fixing portion 73 rotates with respect to the first fixing portion 71 and the end of the arm member 60.

The sixth driver 74 may be connected to the fifth driver 72 via the second fixing portion 73, and may be rotatably coupled about a roll axis perpendicular to the yaw axis. In this case, the sixth driver 74 may connect the second fixing portion 73 and a third fixing portion 75 to rotate the third fixing portion 75 with respect to the second fixing portion 73.

The seventh driver 76 may be connected to the sixth driver 74 via the third fixing portion 75, and may be rotatably coupled about a pitch axis perpendicular to the yaw axis and the roll axis. In this case, the seventh driver may connect the third fixing portion 75 and a fourth fixing portion 77 to rotate the fourth fixing portion with respect to the third fixing portion. The fourth fixing portion may be fixedly connected to the tray 80.

Angles meaning the posture of the tray 80 may be represented by roll, pitch, and yaw. The roll means tilting left and right, and the pitch means tilting forward and backward. The yaw means turning based on the axial direction of the arm member 60.

The roll and the pitch may be values indicating how much the tray 80 is tilted relative to a direction of gravity, and an acceleration sensor (not illustrated) and a gyro sensor (not illustrated) may be used to measure the roll and the pitch.

For example, a value of an axis parallel to the direction of gravity of the gyro sensor may be measured, and this value may be used to calculate a value of the yaw. Optionally, a 3-axis geomagnetic sensor compensating for errors may be applied to measure a yaw direction.

The controller 90, which will be described later, may transmit a control signal related to the horizontal posture of the tray 80 to each of the fifth to seventh drivers, based on measured values from the acceleration sensor, the gyro sensor, and the like, and rotation angle information of each of the fifth to seventh drivers 72, 74, and 76, to drive the gimbal 70. In addition, power of the fifth to seventh drivers may be obtained through the connection terminal 33 contacting the rail 10 through which current flows.

Since control of such a gimbal 70 maintaining the tray 80 horizontally has already been known and various types of control have been proposed, a more detailed description of the control of the gimbal will be omitted in this specification.

The tray 80 may be a substantially plate-shaped member, and may have a rectangular shape as a whole. The tray 80 may be fixedly mounted to the fourth fixing portion 77 of the gimbal 70 by, for example, bonding, bolting, or the like. Such a tray 80 may have a size and stiffness capable of supporting an article such as in-flight meals, bedding, or the like.

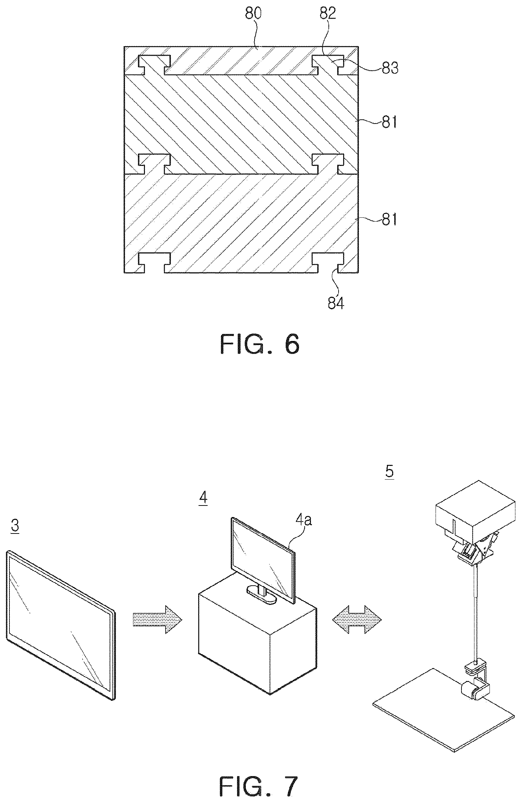

FIG. 6 is a view illustrating a modified example of a tray 80.

Optionally, a tray 80 may be coupled to a modular box 81, to deliver an article accommodated in the modular box to a passenger.

To this end, at least one insertion groove 82 may be formed across a lower surface of the tray 80, and at least one protrusion 83 may be formed across an upper surface of the modular box 81.

A cross-sectional shape of the insertion groove 82 may correspond to a cross-sectional shape of the protrusion 83. For example, a cross-sectional shape such as a trapezoidal shape called a dovetail, a shape having a stepped portion on at least one side surface, or the like may be employed.

Arrangement of the insertion groove 82 and the protrusion 83 is not limited to the above example, and an inverse arrangement thereof is possible. For example, the protrusion may be formed across the lower surface of the tray 80, and the insertion groove may be formed across the upper surface of the modular box 81.

When the protrusion 83 of the modular box 81 is inserted into the insertion groove 82 of the tray 80 in a sliding manner, the tray 80 may be coupled to the modular box. The coupling of the tray 80 and the modular box may be undertaken manually by a crew member.

An insertion groove 84 having the same shape and size as the insertion groove 82 of the tray 80 may be also formed on a lower surface of the modular box 81, such that a plurality of boxes may be stacked. Therefore, the plurality of stacked boxes may be coupled to the tray 80 of a robot according to an example of the present disclosure, and may be transported to a passenger. The plurality of stacked boxes may be separated from the tray 80, and may be stored in a stacked state when not in use.

A robot according to an example of the present disclosure may further include a controller 90 controlling operations of first to seventh drivers 30, 27, 55, 56, 72, 74, 76 and an electric linear actuator to selectively move a slider 20 of the robot, pivoting and/or expanding or contracting an arm member 60, and allowing a gimbal 70 to maintain a horizontal posture of the tray 80.

The controller 90 may be electrically connected to the first to seventh drivers 30, 27, 55, 56, 72, 74, and 76 and the electric linear actuator through at least one of, for example, wired communication, wireless communication, or wired/wireless communication. For example, the controller 90 may be configured to transmit a control signal to each of the drivers and the electric linear actuator through a controller area network (CAN).

The controller 90 may be implemented as a memory, a microprocessor, and the like. The memory may store data for an algorithm or a program reproducing the algorithm for controlling an operation of each component, particularly a corresponding motor. The microprocessor may perform predetermined control of each component, particularly a corresponding driver and a corresponding electric linear actuator, using the data stored in the memory.

The controller 90 may be incorporated into, for example, a control system of a mobility vehicle, or may be used in combination. Such a controller 90 may be configured to control an overall operation of a robot according to an example of the present disclosure.

For example, the controller 90 may move the slider 20 along a rail 10, to reach the same line as a target seat 2 in a cabin 1 and fix the slider 20 in place.

The controller 90 may operate an active ball joint 50 of a robot arm 40 to pivot the arm member 60 toward the target seat 2 and fix the arm member 60 to maintain at an appropriate angle.

When the pivoting of the arm member 60 is completed, the controller 90 may extend an operation rod 61 of the arm member such that the tray 80 approaches the target seat 2.

The controller 90 may control the gimbal 70 to maintain the horizontal posture of the tray 80, until the robot moves and the tray 80 reaches the target seat 2.

Hereinafter, an operation of a robot configured as above according to an example of the present disclosure will be described.

Referring back to FIG. 1, a robot according to an example of the present disclosure installed in a cabin of a mobility vehicle may be installed on a ceiling or in an upper portion of a side wall in the cabin 1. A robot arm 40 and a tray 80, constituting the robot, move along a rail 10 via a slider 20.

Due to arrangement of the robot, an unused space such as a ceiling, a side wall, or the like in the cabin 1 may be maximally utilized to ensure comfortable and smooth movement of a passenger in an aisle

All components of the robot may receive power through the rail 10 through which current flows and a connection terminal 33 contacting the rail.

The slider 20 moves the robot arm 40 and the tray 80 to a desired position by a first driver 30 receiving power from the rail 10 through the connection terminal 33.

An active ball joint 50 of the robot arm 40 may be driven by a third driver 55 and a fourth driver 56, to pivot an arm member 60 connected to a cross spherical gear 51 along a hemispherical trajectory, for example.

As a result, the arm member 60 of the robot arm 40 is inclined at an arbitrary angle with respect to the slider 20. Therefore, the tray 80 may be lifted or lowered, as illustrated in FIG. 1.

In addition, a length of the arm member 60 of the robot arm 40 may be adjusted using a linear actuator equipped with an operating rod 61.

In this manner, the arm member 60 may be inclined and contractable to shorten the length, to minimize a space required for moving or storing the robot, and further prevent interference with movement of a passenger when the robot moves.

In addition, since the arm member 60 is extended while performing pivoting with a three-axis degree of freedom, the tray 80 may easily access the passenger in an inner seat 2 far from an aisle in the cabin 1. Therefore, the robot may have an advantage of being used for automation and advanced service.

A gimbal 70 of the robot arm 40 may be driven by fifth to seventh drivers 72, 74, and 76 to maintain the tray 80 fixedly connected to a fourth fixing portion 77 in a horizontal posture at all times (e.g., while supporting an article so as to keep from dropping or disturbing the article). As such, it is possible to maintain the tray 80 horizontally, such that the robot may stably deliver or collect food or beverages to the passenger even in a shaking environment in which the mobility vehicle is running.

FIG. 7 is a schematic configuration diagram of an in-cabin service system including a robot according to an example of the present disclosure.

An in-cabin service system may include a terminal 3, a management server 4, and a robot 5.

The terminal 3 may be disposed on a seat 2 for a passenger or around the seat such that a passenger may order a desired service. A plurality of terminals may be provided in the cabin 1.

However, the present disclosure is not limited thereto, and the terminal 3 may be various types of portable devices used by the passenger, such as a smartphone, a tablet, a notebook computer, or the like.

The terminal 3 may be communicatively connected to the management server 4. Specifically, the terminal may access the management server through a wired and/or wireless communication network. The terminal may be configured to receive input, e.g., from the passenger, such as information, commands, instructions, or the like.

For example, the passenger may order a service (e.g., to provide an article such as food, drink, blankets, cushions, or the like) via the terminal 3. Also, or alternatively, the passenger may, via the terminal 3, request the service to collect an article such as garbage, recyclables, or the like, or pay for expenses of a paid service.

The management server 4 may receive input from the terminal 3 (e.g., passenger request information), and may display the received information on a display 4a. The management server may determine a stock amount (e.g., number) of products in real time, and may display stock amount information on the display.

The management server 4 may be communicatively connected to a controller 90 of the robot 5 via a wired and/or wireless communication network. Therefore, according to an operation of a crew member, the management server 4 may output a signal commanding an operation of the robot to the controller of the robot, or may receive information about a location or state of the robot, and may display the same on the display 4a.

For example, the crew member may check contents such as a passenger's order or request displayed on the display 4a of the management server 4, and may set an article on a tray 80 of the robot. As necessary, the crew member may couple a modular box 81 to the tray 80.

The crew member may manipulate the management server 4 to input coordinates of the target seat 2, and command the operation of the robot 5. According to a command signal received from the controller 90, the robot may perform the above-described operation to provide a desired service to the passenger.

In a service for collecting an article, when the robot 5 returns to its original position, the crew member may remove the article collected by the robot from the tray 80.

An aspect of the present disclosure is to provide a robot safely and automatically delivering or collecting an article such as in-flight meals, bedding, or the like in a cabin of a mobility vehicle, and an in-cabin service system including the same.

While examples have been illustrated and described above, it will be apparent to those skilled in the art that modifications and variations could be made without departing from the scope of the present disclosure as defined by the appended claims.

## Claims

1. A robot comprising:
a rail (10) being configured to be installed on a ceiling or a side wall of a cabin (1);
a slider (20) configured to move along the rail (10);
a robot arm (40) having one end pivotably connected to the slider (20); and
a tray (80) connected to another end of the robot arm (40) and configured to maintain an orientation so as to be able to support an article,
**characterized in that**
the robot further comprises a first driver (30) connected to the rail (10) and to the slider (20) and configured to provide a moving force to the slider (20),
wherein the first driver (30) comprises a linear motor, and
wherein one of the rail (10) or the slider (20) comprises a plurality of permanent magnets (31) arranged in a longitudinal direction of the rail (10), and the other of the rail (10) or the slider (20) has a coil (32) wound or stacked thereon.

2. The robot of claim 1,
wherein the rail (10) forms a groove (11) extending in a longitudinal direction of the rail (10),
wherein the groove (11) has a substantially cross-shaped cross-section,
wherein the groove (11) comprises a main groove (12) extending in a first direction from a surface of the rail (10), and a separation prevention groove (13) formed in a second direction so as to intersect with the main groove (12), wherein each of the main groove (12) and the separation prevention groove (13) extend in the longitudinal direction of the rail (10),
wherein the slider (20) comprises:
a support portion (21) having a flat shape and configured to support the robot arm (40), and
an insertion portion (22) connected to the support portion (21) at a right angle and configured to be inserted into the main groove (12), and
wherein the insertion portion (22) comprises a separation prevention portion (28) configured to protrude from the insertion portion (22) so as to be insertable into the separation prevention groove (13).

3. The robot of claim 2,
wherein a plurality of locking grooves (14) are formed by at least one edge of the groove (11) so as to be disposed at intervals from each other in the longitudinal direction of the rail (10), and
the support portion (21) comprises:
a hollow portion,
a position fixing portion (23) configured to extend out of or retract into the hollow portion, and
at least one through-hole (24) formed in one side of the support portion (21).

4. The robot of claim 3,
wherein the position fixing portion (23) comprises:
at least one stud (25),
a frame (26) connected to the stud (25), and
a second driver (27) configured to provide driving force for moving the frame (26), wherein the stud (25) is configured to be inserted into one of the plurality of locking grooves (14) via the through-hole (24).

5. The robot of any of claims 1 to 4, further comprising a connection terminal (33) coupled to the slider (20) and configured to electrically connect to and slide on the rail (10) so as to conduct electricity from the rail (10),
wherein the connection terminal (33) is electrically connected to the coil (32).

6. The robot of any of the preceding claims,
wherein the robot arm (40) comprises:
an active ball joint (50) mounted on the slider (20);
an arm (60) having one end connected to an output shaft (59) of the active ball joint (50); and
a gimbal (70) mounted on another end of the arm (60).

7. The robot of claim 6,
wherein the active ball joint (50) comprises:
a holder (53) fixed to the slider (20) via a bracket (54) and having a concave groove;
a cross spherical gear (51) that:
is partially accommodated in the concave groove,
is supported by the holder (53),
comprises orthogonal teeth over a surface thereof,
and
has one side fixed to the output shaft (59);
a pair of monopole gears (52) configured to engaged two sides of the cross spherical gear (51); and
a third driver (55) and a fourth driver (56), mounted on the holder (53) and configured to support and provide driving force to the pair of monopole gears (52).

8. The robot of claim 7,
wherein the third driver (55) and the fourth driver (56) each comprise:
a roll driving motor (55a) configured to roll a corresponding monopole gear of the pair of monopole gears (52),
and a pitch driving motor (55b) configured to pitch the corresponding monopole gear.

9. The robot of claim 8,
wherein the third driver (55) and the fourth driver (56) each further comprise:
an internal rotor (55c) configured to:
be rotated about a roll axis by the roll driving motor (55a), and
provide a rotational axis of the corresponding monopole gear;
a differential internal worm gear (55d) comprising teeth formed in a cylinder and configured to be rotated about a roll axis by the pitch driving motor (55b); and
a differential pinion coupled to the internal rotor (55c) and configured to allow the monopole gear to rotate about the rotational axis.

10. The robot of any of claims 6 to 9,
wherein the arm (60) comprises an electric linear actuator equipped with an operating rod (61).

11. The robot of claim 10,
wherein the gimbal (70) comprises a first fixing portion (71), a second fixing portion (73), a third fixing portion (75), and a fourth fixing portion (77),
wherein the first fixing portion (71) is fixed to an end portion of the operating rod (61);
a fifth driver (72) connected to the first fixing portion (71) and to the second fixing portion (73) and configured to rotate the second fixing portion (73) with respect to the first fixing portion (71);
a sixth driver (74) connected to the second fixing portion (73) and to the third fixing portion (75) and configured to rotate the third fixing portion (75) with respect to the second fixing portion (73); and
a seventh driver (76) connected to the third fixing portion (75) and to the fourth fixing portion (77) and configured to rotate the fourth fixing portion (77) with respect to the third fixing portion (75),
wherein the fourth fixing portion (77) is fixedly connected to the tray (80).

12. The robot of any of claims 6 to 11, when claim 6 is not dependent on claim 5, further comprising a connection terminal (33) coupled to the slider (20) and configured to contact the rail (10) and to conduct electricity from the rail (10),
wherein the connection terminal (33) is electrically connected to at least one of the active ball joint (50), the arm (60), or the gimbal (70).

13. An in-cabin service system comprising:
a terminal (3) disposed in a cabin (1);
a management server (4) communicatively connected to the terminal (3); and
a robot (5) according to any one of claims 1-12 communicatively connected to the management server (4) and configured to operate according to a signal from the management server (4).

14. The in-cabin service system of claim 13,
wherein the management server (4) is configured to:
receive information related to a request, from a passenger, input to the terminal (3),
cause display of the received information by a display (4a),
output a signal comprising a command for an operation of the robot (5), and
receive information about a position or a state of the robot (5) to be displayed by the display (4a).

## Patentansprüche

1. Roboter, umfassend:
eine Schiene (10), die zur Installation an einer Decke oder einer Seitenwand einer Kabine (1) konfiguriert ist;
einen Schlitten (20), der so konfiguriert ist, dass er sich entlang der Schiene (10) bewegt;
einen Roboterarm (40), dessen eines Ende schwenkbar mit dem Schlitten (20) verbunden ist; und
eine Ablage (80), die mit dem anderen Ende des Roboterarms (40) verbunden ist und so konfiguriert ist, dass sie eine Ausrichtung beibehält, um einen Artikel stützen zu können,
**dadurch gekennzeichnet, dass**
der Roboter weiter einen ersten Antreiber (30) umfasst, der mit der Schiene (10) und dem Schlitten (20) verbunden ist, und so konfiguriert ist, dass er eine Bewegungskraft auf den Schlitten (20) ausübt,
wobei der erste Antreiber (30) einen Linearmotor umfasst,
und
wobei entweder die Schiene (10) oder der Schlitten (20) eine Vielzahl von Permanentmagneten (31) umfasst, die in einer Längsrichtung der Schiene (10) angeordnet sind, und der andere der Schiene (10) oder des Schlittens (20) eine Spule (32) aufweist, die gewickelt oder gestapelt ist.

2. Roboter nach Anspruch 1,
wobei die Schiene (10) eine Nut (11) bildet, die sich in einer Längsrichtung der Schiene (10) erstreckt,
wobei die Nut (11) einen im Wesentlichen kreuzförmigen Querschnitt aufweist,
wobei die Nut (11) eine Hauptnut (12) umfasst, die sich in einer ersten Richtung von einer Oberfläche der Schiene (10) erstreckt, und eine Trennungsverhinderungsnut (13), die in einer zweiten Richtung ausgebildet ist, so dass sie sich mit der Hauptnut (12) kreuzt, wobei sich die Hauptnut (12) und die Trennungsverhinderungsnut (13) jeweils in der Längsrichtung der Schiene (10) erstrecken,
wobei der Schlitten (20) umfasst:
einen Stützabschnitt (21), der eine flache Form aufweist und zum Stützen des Roboterarms (40) konfiguriert ist, und
einen Einführabschnitt (22), der in einem rechten Winkel mit dem Stützabschnitt (21) verbunden ist, und zum Einführen in die Hauptnut (12) ausgebildet ist, und
wobei der Einführabschnitt (22) einen Trennungsverhinderungsabschnitt (28) umfasst, der so konfiguriert ist, dass er vom Einführabschnitt (22) hervorsteht. so dass er in die Trennverhinderungsnut (13) einführbar ist.

3. Roboter nach Anspruch 2,
wobei durch mindestens eine Kante der Nut (11) eine Vielzahl von Verriegelungsnuten (14) gebildet sind, so dass sie in der Längsrichtung der Schiene (10) in Abständen voneinander angeordnet sind, und
der Stützabschnitt (21) umfasst:
einen hohlen Abschnitt,
einen Positionsfixierungsabschnitt (23), der so konfiguriert ist, dass er aus dem hohlen Abschnitt hervorsteht oder in diesen hinein einfährt, und
mindestens ein Durchgangsloch (24), das in einer Seite des Stützabschnitts (21) ausgebildet ist,

4. Roboter nach Anspruch 3,
wobei der Positionsfixierungsabschnitt (23) umfasst:
mindestens einen Bolzen (25),
einen mit dem Bolzen (25) verbundenen Rahmen (26), und
einen zweiten Antreiber (27), der so konfiguriert ist, dass er Antriebskraft zum Bewegen des Rahmens (26) bereitstellt, wobei der Bolzen (25) so konfiguriert ist, dass er über das Durchgangsloch (24) in eine der Vielzahl von Verriegelungsnuten (14) eingeführt wird.

5. Roboter nach einem der Ansprüche 1 bis 4, weiter umfassend ein Verbindungsterminal (33), das mit dem Schlitten (20) gekoppelt ist, und so konfiguriert ist, dass es eine elektrische Verbindung mit der Schiene (10) herstellt und auf dieser gleitet. um Strom von der Schiene (10) zu leiten,
wobei das Verbindungsterminal (33) elektrisch mit der Spule (32) verbunden ist.

6. Roboter nach einem der vorstehenden Ansprüche,
wobei der Roboterarm (40) umfasst:
ein aktives Kugelgelenk (50), das am Schlitten (20) montiert ist;
einen Arm (60), dessen eines Ende mit einer Ausgangswelle (59) des aktiven Kugelgelenks (50) verbunden ist; und
einen Kardanrahmen (70), der an einem anderen Ende des Arms (60) montiert ist.

7. Roboter nach Anspruch 6,
wobei das aktive Kugelgelenk (50) umfasst:
einen Halter (53), der über eine Halterung (54) am Schlitten (20) befestigt ist und eine konkave Nut aufweist;
ein Kreuzkugelzahnrad (51), das:
teilweise in der konkaven Nut untergebracht ist,
durch den Halter (53) gestützt wird,
über einer Oberfläche orthogonale Zähne aufweist, und
mit einer Seite an der Ausgangswelle (59) befestigt ist;
ein Paar Monopolzahnräder (52), die so konfiguriert sind, dass sie mit zwei Seiten des Kreuzkugelzahnrads (51) in Eingriff stehen; und
einen dritten Antreiber (55) und einen vierten Antreiber (56), die auf dem Halter (53) montiert sind, und dazu konfiguriert sind, das Paar Monopolzahnräder (52) zu stützen und diesen Antriebskraft bereitzustellen.

8. Roboter nach Anspruch 7,
wobei der dritte Antreiber (55) und der vierte Antreiber (56) jeweils umfassen:
einen Rollenantriebsmotor (55a), der dazu konfiguriert ist, ein entsprechendes Monopolzahnrad des Paars Monopolzahnräder (52) zu rollen,
und einen Neigungsantriebsmotor (55b), der so konfiguriert ist, dass er das entsprechende Monopolzahnrad neigt.

9. Roboter nach Anspruch 8,
wobei der dritte Antreiber (55) und der vierte Antreiber (56) jeweils weiter umfassen:
einen Innenrotor (55c), der konfiguriert ist zum:
Gedrehtwerden durch den Rollenantriebsmotor (55a) um eine Rollenachse, und
Bereitstellen einer Drehachse des entsprechenden Monopolzahnrads;
ein Differential-Innenschneckenzahnrad (55d), umfassend in einem Zylinder geformte Zähne, und konfiguriert zum Gedrehtwerden durch den Neigungsantriebsmotor (55b) um eine Rollenachse; und
ein Differentialritzel, das mit dem Innenrotor (55c) gekoppelt ist, und so konfiguriert ist, dass es dem Monopolzahnrad ermöglicht, sich um die Rotationsachse zu drehen.

10. Roboter nach einem der Ansprüche 6 bis 9,
wobei der Arm (60) einen elektrischen Linearantrieb umfasst, der mit einer Betätigungsstange (61) ausgestattet ist.

11. Roboter nach Anspruch 10,
wobei der Kardanrahmen (70) einen ersten Fixierungsabschnitt (71), einen zweiten Fixierungsabschnitt (73), einen dritten Fixierungsabschnitt (75) und einen vierten Fixierungsabschnitt (77) umfasst,
wobei der erste Fixierungsabschnitt (71) an einem Endabschnitt der Betätigungsstange (61) befestigt ist;
einen fünften Antreiber (72), der mit dem ersten Fixierungsabschnitt (71) und dem zweiten Fixierungsabschnitt (73) verbunden ist, und dazu konfiguriert ist, den zweiten Fixierungsabschnitt (73) in Bezug auf den ersten Fixierungsabschnitt (71) zu drehen;
einen sechsten Antreiber (74), der mit dem zweiten Fixierungsabschnitt (73) und dem dritten Fixierungsabschnitt (75) verbunden ist, und so konfiguriert ist, dass er den dritten Fixierungsabschnitt (75) in Bezug auf den zweiten Fixierungsabschnitt (73) dreht; und
einen siebten Antreiber (76), der mit dem dritten Fixierungsabschnitt (75) und dem vierten Fixierungsabschnitt (77) verbunden ist, und dazu konfiguriert ist, den vierten Fixierungsabschnitt (77) in Bezug auf den dritten Fixierungsabschnitt (75) zu drehen,
wobei der vierte Fixierungsabschnitt (77) fest mit der Ablage (80) verbunden ist.

12. Roboter nach einem der Ansprüche 6 bis 11, wenn Anspruch 6 nicht von Anspruch 5 abhängig ist, weiter umfassend ein Verbindungsterminal (33), das mit dem Schlitten (20) gekoppelt ist, und dazu konfiguriert ist, die Schiene (10) zu berühren und Strom von der Schiene (10) zu leiten,
wobei das Verbindungsterminal (33) elektrisch mit mindestens einem von einem aktiven Kugelgelenk (50), dem Arm (60) oder dem Kardanrahmen (70) verbunden ist.

13. Kabinenservicesystem, umfassend:
ein in einer Kabine (1) angeordnetes Terminal (3);
einen Verwaltungsserver (4), der kommunikativ mit dem Terminal (3) verbunden ist; und
einen Roboter (5) nach einem der Ansprüche 1-12, der kommunikativ mit dem Verwaltungsserver (4) verbunden ist, und so konfiguriert ist, dass er gemäß einem Signal vom Verwaltungsserver (4) arbeitet.

14. Kabinenservicesystem nach Anspruch 13,
wobei der Verwaltungsserver (4) konfiguriert ist zum:
Empfangen von Informationen zu einer in das Terminal (3) eingegebenen Anfrage von einem Passagier,
Veranlassen, die empfangenen Informationen durch eine Anzeige (4a) anzuzeigen,
Ausgeben eines Signals, das einen Befehl für eine Operation des Roboters (5) umfasst, und
Empfangen von Informationen über eine Position oder einen Zustand des Roboters (5), die durch die Anzeige (4a) angezeigt werden sollen.

## Revendications

1. Robot comprenant :
un rail (10) conçu pour être installé sur un plafond ou une paroi latérale d'une cabine (1) ;
une pièce coulissante (20) conçue pour se déplacer le long du rail (10) ;
un bras de robot (40) présentant une extrémité reliée de manière pivotante à la pièce coulissante (20) ; et
un plateau (80) relié à une autre extrémité du bras de robot (40) et conçu pour maintenir une orientation de manière à pouvoir supporter un article,
**caractérisé en ce que**
le robot comprend en outre un premier dispositif d'entraînement (30) relié au rail (10) et à la pièce coulissante (20) et conçu pour fournir une force de déplacement à la pièce coulissante (20),
dans lequel le premier dispositif d'entraînement (30) comprend un moteur linéaire, et
dans lequel l'un du rail (10) ou de la pièce coulissante (20) comprend une pluralité d'aimants permanents (31) disposés dans la direction longitudinale du rail (10) et l'autre du rail (10) ou de la pièce coulissante (20) présente une bobine (32) enroulée ou empilée.

2. Robot selon la revendication 1,
dans lequel le rail (10) forme une rainure (11) s'étendant dans la direction longitudinale du rail (10),
dans lequel la rainure (11) présente une section transversale sensiblement cruciforme,
dans lequel la rainure (11) comprend une rainure principale (12) s'étendant dans une première direction à partir d'une surface du rail (10), et une rainure de prévention de séparation (13) formée dans une seconde direction de manière à croiser la rainure principale (12), dans lequel la rainure principale (12) et la rainure de prévention de séparation (13) s'étendent toutes deux dans la direction longitudinale du rail (10),
dans lequel la pièce coulissante (20) comprend :
une partie de support (21) présentant une forme plate et conçue pour supporter le bras de robot (40), et
une partie d'insertion (22) reliée à la partie de support (21) à un angle droit et conçue pour être insérée dans la rainure principale (12), et
dans lequel la partie d'insertion (22) comprend une partie de prévention de séparation (28) conçue pour faire saillie à partir de la partie d'insertion (22) de manière à pouvoir être insérée dans la rainure de prévention de séparation (13).

3. Robot selon la revendication 2,
dans lequel une pluralité de rainures de verrouillage (14) est formée par au moins un bord de la rainure (11) de manière à être disposées à intervalles les unes des autres dans la direction longitudinale du rail (10) et
la partie de support (21) comprend :
une partie creuse,
une partie de fixation de position (23) conçue pour s'étendre hors de la partie creuse ou se rétracter dans celle-ci, et
au moins un trou traversant (24) formé dans un côté de la partie de support (21),

4. Robot selon la revendication 3,
dans lequel la partie de fixation de position (23) comprend :
au moins un goujon (25),
un cadre (26) relié au goujon (25), et
un deuxième dispositif d'entraînement (27) conçu pour fournir une force d'entraînement pour déplacer le cadre (26), dans lequel le goujon (25) est conçu pour être inséré dans l'une de la pluralité de rainures de verrouillage (14) par l'intermédiaire du trou de passage (24).

5. Robot selon l'une quelconque des revendications 1 à 4, comprenant en outre une borne de connexion (33) couplée à la pièce coulissante (20) et conçue pour se connecter électriquement au rail (10) et glisser sur celui-ci de manière à conduire l'électricité à partir du rail (10),
dans lequel la borne de connexion (33) est connectée électriquement à la bobine (32).

6. Robot de l'une quelconque des revendications précédentes,
dans lequel le bras de robot (40) comprend :
un joint à rotule actif (50) monté sur la pièce coulissante (20) ;
un bras (60) présentant une extrémité reliée à un arbre de sortie (59) du joint à rotule actif (50) ; et
un cardan (70) monté sur une autre extrémité du bras (60).

7. Robot selon la revendication 6,
dans lequel le joint à rotule actif (50) comprend :
un support (53) fixé à la pièce coulissante (20) par l'intermédiaire d'un étrier (54) et présentant une rainure concave ;
un engrenage sphérique transversal (51) qui :
est partiellement logé dans la rainure concave,
est soutenu par le support (53),
comprend des dents orthogonales sur une surface, et
présente un côté fixé à l'arbre de sortie (59) ;
une paire d'engrenages unipolaires (52) conçus pour venir en prises avec deux côtés de l'engrenage sphérique transversal (51) ; et
un troisième dispositif d'entraînement (55) et un quatrième dispositif d'entraînement (56), montés sur le support (53) et conçus pour supporter et fournir une force d'entraînement à la paire d'engrenages unipolaires (52).

8. Robot selon la revendication 7,
dans lequel le troisième dispositif d'entraînement (55) et le quatrième dispositif d'entraînement (56) comprennent chacun :
un moteur d'entraînement de roulis (55a) conçu pour faire rouler un engrenage unipolaire correspondant de la paire d'engrenages unipolaires (52),
et un moteur d'entraînement de tangage (55b) conçu pour faire tanguer l'engrenage unipolaire correspondant.

9. Robot selon la revendication 8,
dans lequel le troisième dispositif d'entraînement (55) et le quatrième dispositif d'entraînement (56) comprennent chacun en outre :
un rotor interne (55c) conçu pour :
être mis en rotation autour d'un axe de roulis par le moteur d'entraînement de roulis (55a), et
fournir un axe de rotation de l'engrenage unipolaire correspondant ;
un engrenage à vis sans fin interne différentiel (55d) comprenant des dents formées dans un cylindre et conçu pour être mis en rotation autour d'un axe de roulis par le moteur d'entraînement de tangage (55b) ; et
un pignon différentiel couplé au rotor interne (55c) et conçu pour permettre à l'engrenage unipolaire de tourner autour de l'axe de rotation.

10. Robot selon l'une quelconque des revendications 6 à 9,
dans lequel le bras (60) comprend un actionneur linéaire électrique équipé d'une tige de commande (61).

11. Robot selon la revendication 10,
dans lequel le cardan (70) comprend une première partie de fixation (71), une deuxième partie de fixation (73), une troisième partie de fixation (75) et une quatrième partie de fixation (77),
dans lequel la première partie de fixation (71) est fixée à une partie d'extrémité de la tige de commande (61) ;
un cinquième dispositif d'entraînement (72) relié à la première partie de fixation (71) et à la deuxième partie de fixation (73) et conçu pour faire tourner la deuxième partie de fixation (73) par rapport à la première partie de fixation (71) ;
un sixième dispositif d'entraînement (74) relié à la deuxième partie de fixation (73) et à la troisième partie de fixation (75) et conçu pour faire tourner la troisième partie de fixation (75) par rapport à la deuxième partie de fixation (73) ; et
un septième dispositif d'entraînement (76) relié à la troisième partie de fixation (75) et à la quatrième partie de fixation (77) et conçu pour faire tourner la quatrième partie de fixation (77) par rapport à la troisième partie de fixation (75),
dans lequel la quatrième partie de fixation (77) est reliée de manière fixe au plateau (80).

12. Robot selon l'une quelconque des revendications 6 à 11, lorsque la revendication 6 ne dépend pas de la revendication 5, comprenant en outre une borne de connexion (33) couplée à la pièce coulissante (20) et conçue pour entrer en contact avec le rail (10) et pour conduire l'électricité à partir du rail (10),
dans lequel la borne de connexion (33) est connectée électriquement à au moins l'une du joint à rotule actif (50), du bras (60), ou du cardan (70).

13. Système de service en cabine comprenant :
un terminal (3) disposé dans une cabine (1) ;
un serveur de gestion (4) connecté de manière communicative au terminal (3) ;
et
un robot (5) selon l'une quelconque des revendications 1 à 12, connecté de manière communicative au serveur de gestion (4) et conçu pour fonctionner conformément à un signal provenant du serveur de gestion (4).

14. Système de service en cabine selon la revendication 13,
dans lequel le serveur de gestion (4) est conçu pour :
recevoir des informations relatives à une demande, émanant d'un passager, entrée sur le terminal (3),
provoquer l'affichage des informations reçues par un écran (4a),
émettre un signal comprenant une commande pour une opération du robot (5), et
recevoir des informations sur une position ou un état du robot (5) à afficher par l'écran (4a).
